# EUROPEAN PATENT APPLICATION

(11) **EP 1 850 325 A1**
(43) Date of publication of application: **31.10.2007**
(21) Application number: 07251799.8
(22) Date of filing: 30.04.2007
(51) Int. Cl.: G10L 15/26, F02D 41/22, G01M 13/02, G01M 15/14, G07C 3/00

(54) **Machine prognostics and health monitoring using speech recognition techniques**

(30) Priority: 28.04.2006 US 412901
(71) Applicant: Pratt & Whitney Canada Corp., Longueuil QC J4G 1A1 (CA)
(72) Inventor: Dooley, Kevin Allen, Mississauga Ontario L5C 2R6 (CA)
(74) Representative: Leckey, David Herbert

(57) **Abstract**

A method of monitoring the health of a machine by capturing sound data of the machine in operation and comparing the sound data to known sounds, preferably using human speech recognition techniques. Diagnostic and/or prognostic information about the machine's operation may then be determined based at least in part on such comparison.

## Description

### TECHNICAL FIELD

The invention relates generally to health monitoring of machines.

### BACKGROUND OF THE ART

Monitoring of various parameters indicative of a machine's operation can be useful in determining the health of the machine, and predicting when and what type of service may soon be required for the machine. Machines of all types are subject to health monitoring, and data about machine operation may be gathered in many different ways and reflecting a multitude of parameters. Nonetheless, there exists room for improvement.

### SUMMARY OF THE INVENTION

In one aspect, the present invention provides a method of monitoring the health of a machine using a health monitoring system, the method comprising the steps of: capturing sound produced by the machine during operation thereof; and comparing the sound to known reference sounds.

In a second aspect, the present invention provides a method of monitoring the health of a machine using a health monitoring system, the method comprising the steps of: intermittently capturing sound data of the engine in operation; and comparing the sound data to known sound data to determine a health condition of the machine.

There is also provided, in accordance with another aspect of the present invention, a gas turbine engine health monitoring system comprising at least one microphone communicating with a sound recognition system.

Further details of these and other aspects of the present invention will be apparent from the detailed description and figures included below.

### DESCRIPTION OF THE DRAWINGS

Reference is now made to the accompanying figures depicting aspects of the present invention, in which:
Fig. 1 is a schematic cross-sectional view of a gas turbine engine;
Fig. 2 is schematic view of a system for monitoring a machine in accordance with an aspect of the present invention;
Fig. 3 is a flow chart of a method of monitoring the health of a machine in accordance with an aspect of the present invention; and
Fig. 4 is a flow chart depicting an embodiment of a method of processing and analyzing machine sound captured according to the method of Fig. 3.

### DETAILED DESCRIPTION OF THE PREFERRED EMBODIMENTS

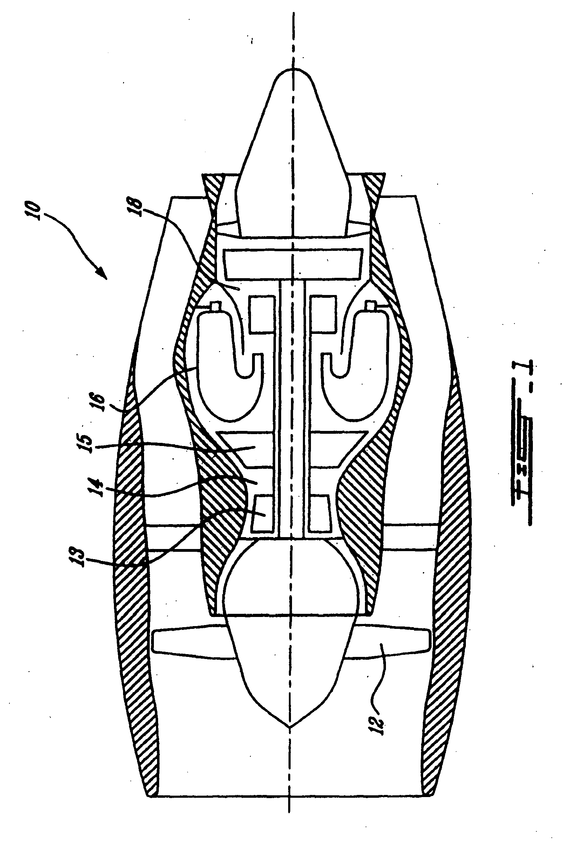

Fig.1 illustrates a gas turbine engine 10 of a type preferably provided for use in subsonic flight, generally comprising in serial flow communication a fan 12 through which ambient air is propelled, a multistage compressor 14 for pressurizing the air, a combustor 16 in which the compressed air is mixed with fuel and ignited for generating an annular stream of hot combustion gases, and a turbine section 18 for extracting energy from the combustion gases. The present invention permits health monitoring of various machines, including such a gas turbine engine 10. However, it is to be understood that any type of machine may be monitored as described in further detail below. The term "machine" as used herein will be understood to include any mechanical system in motion, such as the example gas turbine engine 10 considered herein.

The system and method of one aspect of the present invention permits machine sensor data, obtained from a sensor such as a microphone for example, to be captured and employed for the purpose of determining the health of the machine in question, whether a gas turbine engine 10 or another type of machine. Thus, early warning of impending problems and/or diagnosis of existing problems with the normal functioning of a system, such as an engine system, is possible.

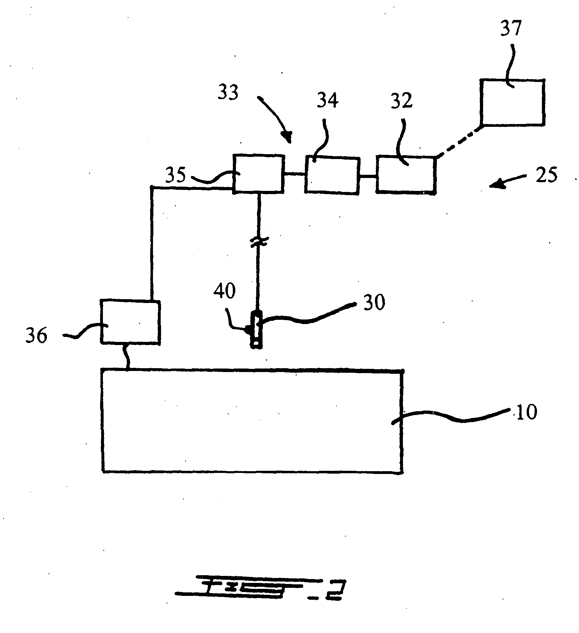

Referring to Fig. 2, a monitoring system 25 for monitoring the health of a machine, such as gas turbine 10, is depicted. The monitoring system 25 includes a microphone or vibration sensor assembly 30, containing one or more of such devices, which communicates with a sound recognition system 33 including a data analyzer 34, described further below, a signal conditioner 35 and a data collector/transmitter 32. In the embodiment depicted, the sound recognition system 33 communicates with a controller 36 of the machine 10 (such as an electronic engine controller of the gas turbine engine 10) and with a preferably central knowledge base 37. The number, type and placement of microphones/sensors employed in microphone/vibration assembly 30 depends on the machine type, size and parameters to be monitored, among other things. In the case of an aircraft gas turbine engine 10, two microphones 30 are preferably provided and mounted under the engine cowling. The signal conditioner, data collector/transmitter 32 and the data analyzer 34 may also be incorporated together in a common assembly, or alternately a single device (such as a microcomputer) may perform the roles of each of these components.

In one embodiment, the data analyzer 34 includes a computer having at least one human speech recognition software algorithm installed/programmed therein, which is capable of comparing the captured sound data from the microphone(s) to known or reference sound data, preferably stored onboard within the monitoring system. Suitable human speech recognition systems include those based on Hidden Markov Model ("HMM") techniques. Systems having both analysis and probability functions are preferred, are commercially available, can be quite small and may be inexpensively obtained. The speech recognition system is trained to recognise "words" indicative of the machine's health and operational conditions, as desired. Preferably, as mentioned, the recognition system includes a probability calculation on "word" matching, and has some form of output code generator, to indicate whether a word is known or unknown, healthy or unhealthy, which "word" has been recognised and the probability of correct match.

A signal conditioning module 35 may be desirable, depending on the requirements of the speech recognition system selected, to condition the sound signal prior to providing it to the data analyzer 34 of the speech recognition system, such as to make the frequency content or volume compatible with the selected speech recognition (e.g. to bring the signal frequencies into the typical human speech range expected by commercially-available speech recognition systems). Preferably, signal conditioning module 35 modifies captured data in a pre-determined manner, perhaps determined in part on the type or timing of sound data captured (that is, different expected data may have different frequency spectra), with the objective of causing the data to be better handled by the speech recognition system. For example, captured data of a first type (e.g. engine run-up) is modified in a first way, based on the expected frequencies, volume, etc. of such data type, while captured data of a second type (e.g. engine spool-down) is modified in a second way, based on another set of expected frequencies, etc., and so on. Data modification may include frequency filtering and/or transposing out-of-range frequencies into in-range frequencies (e.g. low frequency sounds could be speed up, or very high frequency sounds slowed down, to yield something more processable by the system), and/or other suitable operations. The skilled reader will appreciate, in light of the present disclosure, that the requirements (if any) of the signal conditioning module 35 will be determined, in large part, by the input requirements of the selected sound recognition system.

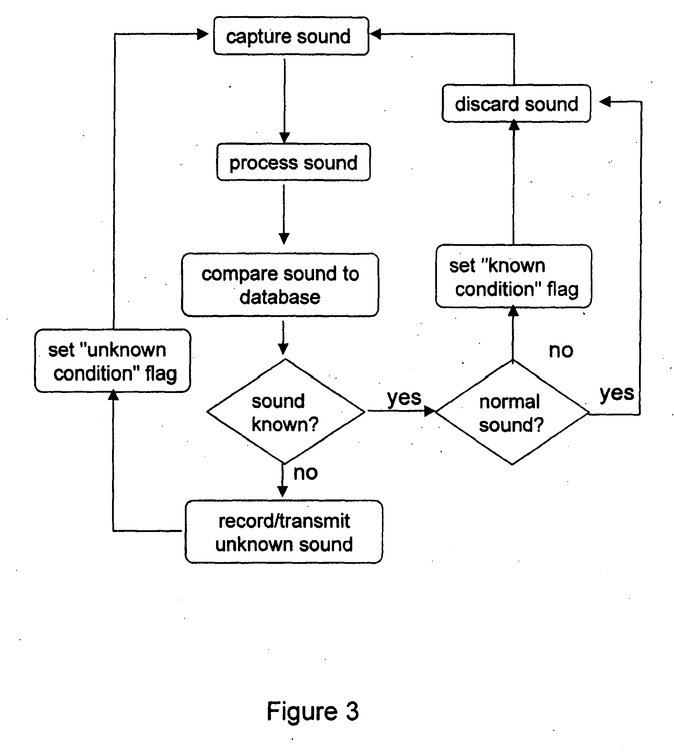

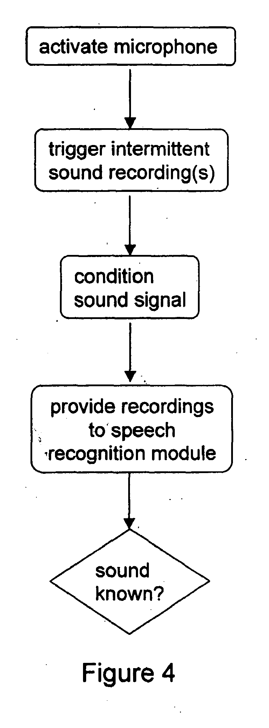

In use, as depicted in Figs. 3 and 4, while the machine 10 is in operation the microphone or vibration sensor 30 captures data (e.g. in random access memory) representing sound or other vibration generated by the machine during its operation, and transmits the data representative of the sound or other vibration to sound recognition system 33, where the data is conditioned, if necessary, to meet the input requirements of the data analyzer 34. The data analyzer 34 compares the captured sound data to known sounds, to determine whether the captured sound is known, and whether it is representative of a healthy operating condition, or an abnormal, sub-optimal, deterioration or problematic condition. Prior to analysis, the data is preferably processed by the data analyzer 34 to permit the data to be analyzed according to speech recognition techniques, as will also be described below. The sound data may also, if desired, be recorded or stored, or transmitted for remote recording or storage, by the data collector/transmitter 32 for further processing.

As mentioned, the data is preferably pre-processed by the signal conditioner 36 prior to analysis to permit the data to be analyzed according to speech recognition techniques. In one embodiment, data is captured intermittently, preferably over relatively short durations (e.g. 1 to 3 seconds, or shorter, or longer, but preferably less than, say, 5 seconds), to form discrete "words" of data to improve comparing/matching accuracy. The "words" are then provided to an appropriately trained speech recognition system contained therein, which analyzes the captured "words" of sound data to determine whether these "words" are known or unknown, and whether the "words" are likely to indicate a healthy engine, or an unhealthy one. Preferably, the intermittent capturing is synchronized with specific engine operational parameters, and designed to locate specific indicators of health, or deterioration, of the machine. For example, for a gas turbine engine 10 these specific engine operations may include acceleration through a particular speed range. In this case, data capture is triggered to start at a given high pressure shaft speed (sometimes referred to as "N2") during a normal acceleration to aircraft take-off, and capturing of the sounds generated is terminated at a second pre-selected N2 speed. As N2 increases, similar "sound bites" may be captured and analyzed. Likewise, during engine deceleration, or engine steady state (i.e. cruise) conditions may be monitored. The captured "words" may be designed to capture the presence (or absence) of vibration, pressure fluctuations in the gas path, compressor surge, engine speed instability, blade tip rubs, sounds related to gearbox operation, as well as general loose or rattling components or surging, or run down noises, and/or any other suitable event or condition.

Preferably, the data analyzer 34 is pre-programmed or "trained" with suitable "vocabulary", such that is as able to identify and distinguish between sound data which is representative of normal healthy engine data, and that what is data indicative of engine problems or conditions requiring action or noting. Referring still to Fig. 3, if after comparing the captured data to known reference data, the captured data is recognised as a normal sound, preferably no specific action is taken. If the sound is recognised as a known problem or indicator, requiring specific service action, a flag indicating the action required, or a code representing the required action, is set for later retrieval, or for immediate or later transmittal to a central location, such as a service centre for the machine. If analysis determines the sound is unknown, a flag indicating, for example, that the further investigation is required is set for later retrieval, or for immediate or later transmittal to a central location, such as the machine manufacturer's diagnostic centre, preferably along with the sound itself, and also preferably along with other specific machine operating information associated with the unknown condition, to provide other potentially useful information to the diagnostic centre. The diagnostic centre preferably uses its available resources to determine the cause of the unknown sound, and an appropriate action required for this machine. If necessary, the diagnostic centre will dispatch an appropriate team or action to acquire more data (e.g. from the machine itself, once it is serviced), in order to determine the cause of the sound, and an appropriate associated action required. Either way, once the cause is determined, a knowledge base is updated, and preferably the newly recognized sound is then transmitted back, preferably with an associated flag or action associated, to sound recognition system 33. This process potentially allows the diagnostic centre to identify the unknown condition off-line, and then upload the appropriate flag or service action back to the sound recognition system 33, or to the appropriate service record for machine 10. This also allows the newly recognized sound to be recognised again in the future, should it reoccur, and then the appropriate service action or flags can be set as required. Preferably all similar systems in service elsewhere, are periodically updated with all such new reference data, as well.

When the "words" of sound data are recognised as healthy engine "words" or sounds, to conserve on-board recording space the analyzer may either simply discard the data or cause a healthy status flag to be recorded for that particular time. If the "word" or sound is recognized as unhealthy and having a specific meaning, again, to conserve recording space the analyzer may either simply discard the data or cause an appropriate "specific unhealthy" status flag to be recorded for that particular time. If the "word" is not recognized at all, preferably it is saved or stored, and a suitable flag set. As mentioned, correlation of unknown "words" by detailed analysis and/or by maintenance records, leads to an improved "vocabulary" which may be used for prognostics, diagnostics and general health monitoring of the machine.

Microphones are preferred because of their wide dynamic range of sensitivity of any sensor type and can detect vibration, pressure fluctuations, sounds generated by the flow of fluid within the machine, transmission related sounds, as well as sounds caused by loose or rattling components. In the case when the machine 10 is a gas turbine engine 10, sounds such as compressor surge, speed instability, or run down noises rubs, gas path flow noise, gearbox generated sounds, and the like can also be detected by the microphone 30. Although microphones are preferred as the sensor 30, a vibration sensor or other suitable sensors may also be used which permit the detection of audible or non-audible pressure waves generated by machine during the operation thereof. In an other aspect, the sound data from the microphone or vibration sensor 30 is collected and analyzed in conjunction with that of other sensors (e.g. temperature sensors, pressure sensors, etc.), in such a way as to form a more complex "word", which is then analyzed by an appropriately trained voice recognition software program within the data analyzer 34, to provide additional dimensions to the health data acquired. Vibration transducers may be used in conjunction with the microphones or alone, and the signal(s) may require preconditioning prior to providing the sound recognition system. The skilled reader will recognise that the sound recognition system, when used with vibration sensors, is preferably provided with reference vibration data for comparison purposes, rather than sound data, *per se.*

The present invention may be used in conjunction with existing data collection systems, or may be used to replace existing systems. Microphones offer the advantages of not having to be directly attached to the engine, reducing life problems associated with connectors exposed to vibration over long periods, and so on.

Referring again to Fig. 2, a small sound generator 40 may be co-located with the microphone 30 such that the monitoring system 25 is able self-check its own health, preferably when the machine 10 stopped, to verify that the monitoring system 25 is in good working order.

As mentioned, the present embodiment applies to any suitable system for which the health condition monitoring is desired. Although communication lines are depicted in Fig. 2, it will be understood that the communications may be wireless, such as by a wireless connection. It will also be understood that the data collector and/or data analyzer may not be mounted on or in proximity to the machine, and, in the case of a gas turbine engine 10, may not even be located on the aircraft but rather at a remote location, and may communicate with the monitoring system 25 via a computer network, such as the World Wide Web.

The above description is meant to be exemplary only, and one skilled in the art will recognize that changes may be made to the embodiments described without department from the scope of the invention disclosed. For example, although the monitoring system is preferably used to monitor the health of a gas turbine engine, it may be used to monitor any machine such as an internal combustion engine, an electric motor or generator, and the like. Additionally, although the data analyzer 34 preferably uses a speech recognition algorithm(s) to perform such a step of comparing the captured sound data to that of known sounds, other software can be alternately used to perform this function. Still other modifications which fall within the scope of the present invention will be apparent to those skilled in the art, in light of a review of this disclosure, and such modifications are intended to fall within the appended claims.

## Claims

1. A method of monitoring the health of a machine (10) using a health monitoring system (25), the method comprising the steps of:
a. capturing sound produced by the machine (10) during operation thereof; and
b. comparing the sound to known reference sounds.

2. The method of claim 1, wherein the step of comparing includes using at least one human speech recognition algorithm to compare the sound to the known reference sounds.

3. The method of claim 2, wherein the sound is conditioned prior to said comparing step, to adjust at least a frequency component of the sound.

4. The method of claim 1, 2 or 3, wherein the step of capturing further comprises capturing the sound intermittently.

5. The method of claim 4, wherein the step of capturing includes using a controller of the machine (10) to at least one of start and stop sound capture based on a machine parameter.

6. The method of claim 5, wherein the machine parameter is a pre-determined machine speed.

7. The method of any preceding claim, wherein the step of capturing is followed by the step of recording the sound.

8. The method of any preceding claim, further comprising the step of transmitting data corresponding to the sound to a remote location.

9. The method of any preceding claim, further comprising detecting a known condition of the machine (10) and setting a signal indicative of a required action associated with the known condition.

10. A method of monitoring the health of a machine (10) using a health monitoring system, the method comprising the steps of:
a. intermittently capturing sound data of the machine (10) in operation; and
b. comparing the sound data to known sound data using a human speech recognition algorithm to determine a health condition of the machine.

11. The method of claim 10, wherein the step of intermittently capturing includes using a controller to at least one of start and stop sound capture based on a machine operating parameter.

12. The method of claim 11, wherein said at least one of starting and stopping the sound capture is based on an operating speed of the machine.

13. The method of claim 10, 11 or 12, wherein the step of comparing includes using at least one speech recognition algorithm to compare the sound data to the known sound data.

14. The method of any of claims 10 to 13, further comprising recording and storing the sound data along with additional machine operational data associated with the sound data.

15. The method of any of claims 10 to 14, further comprising indicating the presence of an abnormal condition of the machine (10) when the captured sound data differs from the known sound data.

16. The method of any preceding claim, wherein the step of capturing includes using at least one microphone (30) to capture sound produced by the machine (10).

17. The method of any preceding claim, further comprising performing a calibration of the health monitoring system (25).

18. The method of claim 17, wherein the step of calibration includes performing a self-check of the health monitoring system (25) using a sound generator (40).

19. The method of claim 18, further comprising integrating the sound generator (40) within the health monitoring system (25) or the at least one microphone (30).

20. A gas turbine engine health monitoring system (25) comprising at least one microphone (30) communicating with a sound recognition system (33) employing a human speech recognition software algorithm.

21. The gas turbine engine health monitoring system of claim 20, wherein the sound recognition system (33) includes a data analyzer (34) having said human speech recognition software algorithm installed therein.

22. The gas turbine engine health monitoring system of claim 21, wherein the sound recognition system(33) includes a signal conditioner (35) adapted to modify at least data produced by said microphone (30) representing sound outside an input frequency range expected by the human speech recognition software algorithm.
